Europäisches Patentamt

European Patent Office

Office européen des brevets

(19)

(11) Veröffentlichungsnummer: **0 286 019 B1**

(12) # EUROPÄISCHE PATENTSCHRIFT

(45) Veröffentlichungstag der Patentschrift:
27.06.90

(21) Anmeldenummer: 88105251.8

(22) Anmeldetag: 31.03.88

(51) Int. Cl.⁵: **C11D 3/00,** C11D 3/37,
C08F 283/00, C08F 283/02,
C08F 283/04

(54) Verwendung von Pfropfpolymerisaten auf Basis von Polyestern, Polyesterurethanen und Polesteramiden als Vergrauungsinhibitoren in Waschmitteln.

(30) Priorität: 09.04.87 DE 3712069

(43) Veröffentlichungstag der Anmeldung:
12.10.88 Patentblatt 88/41

(45) Bekanntmachung des Hinweises auf die Patenterteilung:
27.06.90 Patentblatt 90/26

(84) Benannte Vertragsstaaten:
AT BE CH DE ES FR GB IT LI NL SE

(56) Entgegenhaltungen:
EP-A- 0 168 547
EP-A- 0 210 129
EP-A- 0 219 048
DE-A- 2 706 914
US-A- 4 043 753
US-A- 4 490 149

(73) Patentinhaber: BASF Aktiengesellschaft,
Carl-Bosch-Strasse 38, D-6700 Ludwigshafen(DE)

(72) Erfinder: Kud, Alexander, Am Hellbrunn 57,
D-6509 Eppelsheim(DE)
Erfinder: Trieselt, Wolfgang, Dr., Alwin-Mittasch-Platz 1,
D-6700 Ludwigshafen(DE)
Erfinder: Hartmann, Heinrich, Dr., Weinheimer
Strasse 46, D-6703 Limburgerhof(DE)

**Beschreibung**

Aus der US-PS 3 557 039 sind stabile wäßrige Dispersionen von Polymerisaten bekannt, die durch Kondensation von Terephthalsäure oder Dimethylterephthalat mit Ethylenglykol und Polyethylenglykol eines durchschnittlichen Molkulargewichts von 1000 bis 4000 herstellbar sind. Das molare Verhältnis von Ethylenterephthalat- zu Polyethylenterephthalat-Einheiten beträgt 2:1 bis 6:1. Die Dispersionen werden zur Behandlung der Oberflächen von Polyesterartikeln verwendet.

Aus der GB-PS 1 154 730 ist bekannt, daß beim Waschen von Textilgut die Wiederablagerung von Schmutz auf dem Textilgut dadurch verringert werden kann, daß man zur Waschflotte, die ein Detergens enthält, Polykondensate zusetzt, die entweder sich wiederholende Ester- oder Amideinheiten enthalten. Bei diesen Zusätzen handelt es sich beispielsweise um Kondensationsprodukte, die aus der US-PS 3 557 039 bekannt sind und durch Kondensation von Dimethylterephthalat, Ethylenglykol und Polyethylenglykol eines Molekulargewichts von 1500 erhältlich sind. Anstelle des Polyethylenglykols können bei der Kondensation auch $\alpha,\omega$-Diaminopolyethylenglykole eingesetzt werden. Die Kondensation kann zusätzlich noch in Gegenwart von Caprolactam durchgeführt werden.

Aus der DE-OS 27 06 914 ist ein Verfahren zur Herstellung von flüssigen Harzdispersionen bekannt, bei dem man ethylenisch ungesättigte Monomere, wie Acrylsäureester oder Vinylester, auf eine Polyesterdispersion aufpfropft. Der Polyester hat ein durchschnittliches Molekulargewicht von 500 bis 5000 und wird durch Kondensieren mindestens eines esterbildenden Polyols, z.B. 4,4'-Bis($\beta$-hydroxy-ethoxy-phenyl)-2,2-propan mit Polyalkylenglykol hergestellt. Die so erhaltenen Polyesterdispersionen werden als filmbildendes Material für Klebstoffe, Farben und Tinten sowie als Imprägniermittel und als Bindemittel für Glasfasern verwendet.

Der vorliegenden Erfindung liegt die Aufgabe zugrunde, verbesserte Vergrauungsinhibitoren für Waschmittel auf der Basis von Polykondensaten zur Verfügung zu stellen.

Die Aufgabe wird erfindungsgemäß gelöst, wenn man als Vergrauungsinhibitor in Waschmitteln Pfropfpolymerisate einsetzt, die erhältlich sind durch Pfropfen von

a) Polykondensaten auf Basis von Polyestern, Polyesterurethanen oder Polyesteramiden eines Molekulargewichts (Zahlenmittel) von jeweils 500 bis 100 000 mit

b) 0,2 bis 10 Gewichtsteilen, bezogen auf 1 Gewichtsteil der Polykondensate, an Vinylestern gesättigter $C_1$- bis $C_6$-Carbonsäuren, Acrylsäure- und/oder Methacrylsäureestern von gesättigten, einwertigen 1 bis 4 C-Atome enthaltenden Alkoholen.

Die als Komponente a) für die Herstellung der Pfropfpolymerisate einzusetzenden Polykondensate sind teilweise aus der US-PS 3 557 039 und der GB-PS 1 157 730 bekannt. Die Polyester werden durch Kondensation von Dicarbonsäuren oder deren Estern mit Glykolen und/oder Polyalkylenglykolen in Gegenwart üblicher saurer Katalysatoren hergestellt. Geeignete Dicarbonsäuren leiten sich beispielsweise von gesättigten aliphatischen Dicarbonsäuren mit 2 bis 8 Kohlenstoffatomen ab, z.B. Oxalsäure, Malonsäure, Bernsteinsäure, Adipinsäure und Weinsäure. Geeignete aromatische Dicarbonsäuren enthalten als aromatischen Grundkörper Strukturen, die sich von Benzol, Naphthalin und Anthracen ableiten, z.B. Terephthalsäure, Phthalsäure, iso-Phthalsäure, Naphthalindicarbonsäuren und 9,10-Anthracendicarbonsäure. Außer den aliphatischen und aromatischen Dicarbonsäuren können auch die Diester der Dicarbonsäuren mit gesättigten $C_1$- bis $C_4$-einwertigen Alkoholen verwendet werden. Vorzugsweise setzt man die Methyl- oder Ethylester ein, z.B. Dimethylterephthalat, Oxalsäuredimethylester oder Malonsäuredimethylester.

Als Glykole kommen beispielsweise Ethylenglykol, 1,2-Propylenglykol, 1,3-Propylenglykol, 1,2-Butylenglykol, 1,4-Butandiol und 1,6-Hexandiol in Betracht.

Die Polyalkylenglykole leiten sich von Homo- oder Copolymerisaten von Ethylenoxid mit Propylenoxid und/oder Butylenoxiden ab, z.B. von Homopolymerisaten des Ethylenoxids oder Homopolymerisaten des Propylenoxids. Die Copolymerisate aus Ethylenoxid und Propylenoxid können entweder als Blockcopolymerisate oder als statistische Copolymerisate vorliegen. Diese Copolymerisate können aus Ethylenoxid- und Propylenoxidblöcken oder aus Ethylenoxid-/Propylenoxid-/Ethylenoxid-Blöcken aufgebaut sein. Ebenso ist es möglich, daß die Blockcopolymerisate die Ethylenoxid und Propylenoxid-Blöcke in umgekehrter Reihenfolge eingebaut enthalten. Außerdem eignen sich Terpolymerisate, die außer Ethylenoxid und Propylenoxid noch ein Butylenoxid, z.B. Isobutylenoxid, in Form von Blöcken oder in statistischer Verteilung einpolymerisiert enthalten. Die Copolymerisate enthalten bis zu 30 Mol.%, vorzugsweise 5 bis 30 Mol.% Propylenoxid. Bei Terpolymerisaten aus Ethylenoxid, Propylenoxid und Butylenoxid beträgt der Anteil von Propylenoxid und Butylenoxid vorzugsweise 5 bis 30 Mol.%. Die Polyalkylenoxide werden nach bekannten Verfahren hergestellt, z.B. lagert man im einfachsten Fall Ethylenoxid an Glykol in Gegenwart von Basen als Katalysator an. Man kann jedoch auch Alkylenoxide an mehrwertige Alkohole anlagern, z.B. an Glycerin, Trimethylolpropan, Pentosen oder Hexosen, z.B. an Pentaerythrit. In diesen Fällen erhält man sogenannte Sternpolymere. Das Molekulargewicht der Polyalkylenoxide beträgt 300 bis 50 000, vorzugsweise 300 bis 10 000. Homopolymerisate des Propylenoxids werden bis zu einem Molgewicht von 1000 zur Herstellung der Polyester verwendet. Die Kondensationsreaktion der Dicarbonsäuren bzw. deren Ester mit einem Polyalkylenglykol und gegebenenfalls einem Alkylenglykol wird in Gegenwart üblicher saurer Katalysatoren durchgeführt. Als Katalysatoren eignen sich beispielsweise para-Toluolsulfonsäure, Schwefelsäure, Kaliumhydrogensulfat und Phosphorsäure. Die Reaktion wird bei Temperaturen von 100 bis 300°C unter Entfernung von Wasser aus dem Reaktionsgemisch durchgeführt. Anstelle der freien Säuren kann man die Diester der in Betracht kommenden Dicarbonsäuren einsetzen, wobei man dann in Gegenwart der bekannten Umesterungskatalysatoren arbeitet, z.B. Calciumacetat, Antimontrioxid, Tetrabutyl-ortho-titanat. Die Kondensationsreaktion kann auch über die Zwischenstufe eines Diglykolesters verlaufen, indem man zuerst den Dialkylester, z.B. Dimethylterephthalat oder Oxalsäuredimethylester, in Gegenwart von Ethylenglykol umestert und dann die Kondensationsreaktion in Gegenwart mindestens eines Polyalkylenglykols durchführt.

Die Polyesterurethane werden hergestellt, indem man die oben beschriebenen Polyester mit Diisocyanaten zur Reaktion bringt. Die verwendeten Polyester sind OH-gruppenterminiert. Als Diisocyanate verwendet man z.B. Hexamethylendiisocyanat, 2,4-Toluylendiisocyanat oder 4,4'-Methylenbisphenylisocyanat. Zur Herstellung der Polyesterurethane können anstelle oder zusammen mit den Diisocyanaten auch Triisocyanate eingesetzt werden, z.B. das Anlagerungsprodukt aus Trimethylolpropan und 2,4-Toluylendiisocyanat. Die Herstellung der Polyesterurethane wird vorzugsweise in organischen Lösemitteln durchgeführt, z.B. in Tetrahydrofuran, Aceton, Methylethylketon und Essigester. Man kann auch Lösemittelmischungen einsetzen. Die Lösemittel sollen leichtflüchtig sein, damit sie ohne Schwierigkeiten aus dem Reaktionsgemisch entfernt werden können. Vorzugsweise setzt man Tetrahydrofuran als Lösemittel ein.

Die Polyesteramide werden hergestellt, indem man die Dicarbonsäuren in einer Kondensationsreaktion oder deren Ester in einer Aminolysereaktion gegebenenfalls in Gegenwart von Alkylenglykolen mit aminfunktionalisierten Polyalkylenglykolen umsetzt. Geeignete aminfunktionalisierte Polyalkylenglykole sind beispielsweise $\alpha,\omega$-Diaminopolyethylenglykole mit einem Molekulargewicht von 300 bis 50 000, vorzugsweise 300 bis 10 000. Zur Herstellung von Polyesteramiden kann man auch so vorgehen, daß man COOH-gruppen terminierte Polyester mit Diisocyanaten umsetzt. Als Polyester und Diisocyanate kommen die bereits geschilderten in Frage.

Die Molekulargewichte der Polykondensate richten sich bekanntlich nach den Kondensationsbedingungen. Der gewünschte Polymerisationsgrad kann beispielsweise mit Hilfe der bei der Kondensation entstehenden Menge an Wasser bzw. an Alkohol bestimmt werden. Die erhaltenen Polykondensate besitzen einen Polymerisationsgrad von 2 bis 25, vorzugsweise 2 bis 5. Das Molekulargewicht der Polyester, Polyesterurethane und der Polyesteramide kann vorteilhafterweise 500 bis 100 000, vorzugsweise 500 bis 20 000 betragen. Die Polykondensate können als Endgruppen sowohl OH-, COOH- bzw. COOR (R = $C_1$- bis $C_4$-Alkyl) aufweisen. Die Carboxylgruppen der Polykondensate a) können nachträglich mit Glykolen, wie z.B. Ethylenglykol oder Propylenglykolen, verestert werden. Auch die freien OH-Gruppen der Polykondensate sind einer Veresterung mit Carbonsäuren zugänglich. Sie können jedoch auch durch Umsetzung mit Diisocyanaten zu Polyesteramidketten verlängert werden. Bei Polyesteramiden können Aminogruppen als Endgruppen vorliegen, die ebenfalls durch Umsetzung mit Diisocyanaten kettenverlängert werden können.

Das Molekulargewicht der niedrigmolekularen Polykondensate wird osmometrisch bestimmt, wobei nach dieser Methode das Zahlenmittel der Molmasse erhältlich und damit der Polymerisationsgrad errechenbar ist. Polykondensate mit einer Molmasse (Zahlenmittel) von mehr als 10 000 g/mol werden mit Hilfe der statischen Lichtstreumethode untersucht, aus der ausschließlich das Gewichtsmittel hervorgeht. Zusätzlich wird die OH-Zahl bzw. Säurezahl der Polykondensate bestimmt.

Als Pfropfgrundlage a) verwendet man vorzugsweise Polyester aus Oxalsäure, Terephthalsäure und Phthalsäure bzw. deren Dimethylester mit Ethylenglykol und Polyethylenglykol eines Molekulargewichts (Zahlenmittel) von 300 bis 10 000, wobei bis zu 80 mol.% der Diolkomponenten Ethylenglykol sein kann.

Die oben beschriebenen Polykondensate der Komponente a) werden mit Monomeren b) gepfropft. Geeignete Monomere der Komponente b) sind Vinylester, die sich von einer gesättigten 1 bis 6 C-Atome enthaltenden Monocarbonsäure ableiten, sowie Acrylsäuremethylester, Acrylsäure ethylester, Methacrylsäuremethylester, Methacrylsäureethylester und Mischungen der vorstehend genannten Monomeren. Geeignete Vinylester sind beispielsweise Vinylformiat, Vinylacetat, Vinylpropionat, Vinyl-n-butyrat, Vinyl-isobutyrat, Valeriansäurevinylester, i-Valeriansäurevinylester und Capronsäurevinylester. Von den Monomeren der Gruppe b) verwendet man vorzugsweise Vinylacetat, Vinylpropionat, Acrylsäuremethylester und Mischungen der genannten Monomeren. Außerdem kommen noch Acrylsäure- und Methacrylsäureester in Betracht, die sich von einwertigen, gesättigten Alkoholen mit 3 bis 4 Kohlenstoffatomen ableiten. Als besonders wirksame Vergrauungsinhibitoren haben sich diejenigen gepfropften Polykondensate erwiesen, zu deren Herstellung Acrylsäuremethylester als Monomeren-Komponente b) eingesetzt wurde.

Die oben beschriebenen Monomeren der Komponente b) können gegebenenfalls bis zu 10 Gew.% durch andere Monomere ersetzt werden. Solche Monomere sind beispielsweise Styrol, N-Vinylimidazol, N-Vinylcarbazol, Phenylacrylat, Vinylcaprolactam und N,N-Dialkylamino-$C_2$-bis $C_6$-alkyl (meth)acrylate, z.B. Dimethylaminoethylacrylat, Dimethylaminoethylmethacrylat, Diethylaminoethylacrylat, Diethylaminoethylmethacrylat, Dimethylaminopropylacrylat, Dimethylaminopropylmethacrylat, Diethylamino-n-butylacrylat und Dimethylaminoneopentylacrylat.

Die Pfropfpolymerisation der Polykondensate a) wird nach bekannten Methoden durchgeführt. Die Pfropfpolymerisation erfolgt wie üblich in Gegenwart von Polymerisationsinitiatoren, sie kann jedoch auch durch Einwirkung energiereicher Strahlung, worunter auch energiereiche Elektronenstrahlen verstanden werden sollen, durchgeführt werden. Bei der Pfropfpolymerisation kann man beispielsweise so vorgehen, daß man die Polykondensate der Komponente a) in mindestens einem Monomer der Gruppe b) löst und nach Zugabe eines Polymerisationsinitiators die Mischung auspolymerisiert. Die Pfropfpolymerisation kann beispielsweise auch halbkontinuierlich durchgeführt werden, indem man zunächst einen Teil, z.B. 10 % des zu polymerisierenden Gemisches aus Polykondensat der Gruppe a) mit mindestens einem Monomeren der Gruppe b) und einem Initiator vorlegt, auf Polymerisationstemperatur erhitzt und nach dem Anspringen der Polymerisation den Rest der zu polymerisierenden Mischung nach Fortschritt der Polymerisation zugibt. Die Pfropfpolymerisate können auch dadurch erhalten werden, daß man die Polykondensate der Komponente a) in einem Reaktor vorlegt, auf die Polymerisationstemperatur erwärmt und mindestens ein Monomer der Gruppe b) und Polymerisationsinitiator entweder auf einmal, absatzweise oder vorzugsweise kontinuierlich zufügt und auspolymerisiert. Pro 1 Gewichtsteil der Polykondensate auf Basis von Polyestern, Polyesterurethanen und Polyesteramiden verwendet man 0,2 bis 10, vorzugsweise 0,5 bis 6 Gewichtsteile mindestens eines Monomer b).

Als Polymerisationsinitiatoren verwendet man hauptsächlich organische Peroxide, wie Diacetylperoxid, Dibenzoylperoxid, Succinylperoxid, Di-tert.-butylperoxid, tert.-Butylperbenzoat, tert.-Butylperpivalat, tert.-Butylpermaleinat, Cumolhydroperoxid, Diisopropylperoxidicarbamat, Bis-(o-toluoyl)-peroxid, Didecanoylperoxid, Dioctanoylperoxid, Dilauroylperoxid, Di-tert.-butyl-perisobutyrat, tert.-Butylperacetat, Di-tert.-amylperoxid, tert.-Butylhydroperoxid sowie Mischungen der genannten Initiatoren, Redoxinitiatoren und Azostarter.

Die Pfropfpolymerisation erfolgt in dem Temperaturbereich von 50 bis 200, vorzugsweise 70 bis 140°C. Sie wird üblicherweise unter atmosphärischem Druck durchgeführt, kann jedoch auch unter vermindertem oder erhöhtem Druck ablaufen. Falls gewünscht, kann die oben beschriebene Pfropfpolymerisation auch in einem Lösemittel durchgeführt werden. Hierfür eignen sich beispielsweise Alkohole, z.B. Methanol, Ethanol, n-Propanol, Isopropanol, n-Butanol, sec.-Butanol, tert.-Butanol, n-Pentanol, n-Hexanol und Cyclohexanol sowie Glykole, wie Ethylenglykol, Propylenglykol und Butylenglykol wie die Methyl- oder Ethylether der 2-wertigen Alkohole, Diethylenglykol, Triethylenglykol, Glycerin und Dioxan. Die Pfropfpolymerisation kann außerdem in Wasser als Lösemittel durchgeführt werden. In diesem Fall liegt zunächst eine Lösung vor, die in Abhängigkeit von der Menge der zugegebenen Monomeren der Komponente b) in Wasser mehr oder weniger gut löslich ist. Um wasserunlösliche Produkte, die während der Pfropfpolymerisation entstehen können, in Lösung zu überführen, kann man beispielsweise organische Lösemittel zum Reaktionsgemisch zugeben, z.B. Isopropanol, n-Propanol, Methanol, Aceton, Dimethylformamin oder auch ionische oder nichtionische Tenside. Auch Schutzkolloide, z.B. Polyvinylalkohol, können hierfür verwendet werden.

Die Polyesterurethane werden je nach Konsistenz in der Schmelze oder gelöst in einem organischen Lösemittel, z.B. n-Butanol oder Glykol, gepfropft. Falls das Polyesterurethan in einem stark polymerisationsregelndem Lösungsmittel gelöst ist, z.B. in Tetrahydrofuran, so sollte ein Lösungsmittelaustausch vorgenommen werden. Sofern man Lösungen des Pfropfpolymerisates in einem organischen Lösemittel herstellt, bzw. in Mischungen aus einem organischen Lösemittel und Wasser, so verwendet man pro 100 Gewichtsteile des Pfropfpolymerisates 5 bis 200, vorzugsweise 10 bis 100 Gewichtsteile des organischen Lösemittels oder des Lösemittelgemisches.

Die Pfropfpolymerisate haben einen K-Wert von 5 bis 200, vorzugsweise 5 bis 70 (bestimmt nach H. Fikentscher in Dimethylformamid bei 25°C und in einer Polymerkonzentration von 2 Gew.%).

Die oben beschriebenen Pfropfpolymerisate werden erfindungsgemäß als Vergrauungsinhibitor in Waschmitteln verwendet. Sie haben besondere Bedeutung als Zusatz in Waschmitteln mit reduziertem Phosphatgehalt (darunter soll ein Phosphatgehalt von weniger als 25 Gew.% Natriumtriphosphat verstanden werden) oder in phosphatfreien Waschmitteln. Zur Vergrauungsinhibierung beim Waschen werden die oben beschriebenen Pfropfpolymerisate handelsüblichen Waschmittelformulierungen in einer Menge von 0,1 bis 5, vorzugsweise 0,3 bis 3 Gew.% bezogen auf die Waschmittelmischung, zugesetzt. Die Pfropfpolymerisate können dabei in Form einer Paste, einer hochviskosen Masse, als Dispersion oder als Lösung in einem Lösemittel der Waschmittelformulierung zugegeben werden. Die Pfropfpolymerisate können auch an der Oberfläche von Stellmitteln, z.B. Natriumsulfat oder Gerüststoffen (Zeolithen) sowie an anderen festen Hilfsstoffen der Waschmittelformulierung adsorbiert werden.

Handelsübliche, pulverförmige Waschmittel, deren Phosphatgehalt unter 25 Gew.% liegt bzw. Waschmittel, die überhaupt phosphatfrei sind, enthalten als einen wesentlichen Bestandteil Tenside, z.B. $C_8$- bis $C_{12}$-Alkylphenolethoxylate, $C_{12}$- bis $C_{20}$-Alkanolethoxylate, sowie Blockcopolymerisate des Ethylenoxids und Propylenoxids. Die Polyalkylenoxide sind lineare oder verzweigte Umsetzungsprodukte von Ethylenoxid mit Propylenoxid und/oder Isobutylenoxid, die eine Blockstruktur besitzen oder die auch statistisch aufgebaut sein können. Die Endgruppen der Polyalkylenoxide können gegebenenfalls verschlossen sein. Hierunter soll verstanden werden, daß die freien OH-Gruppen der Polyalkylenoxide verethert und/oder verestert und/oder aminiert und/oder mit Isocyanaten umgesetzt sein können.

Als Bestandteil pulverförmiger Waschmittel eignen sich auch besonders anionische Tenside, wie $C_8$- bis $C_{12}$-Alkylbenzolsulfonate, $C_{12}$- bis $C_{16}$-Alkansulfonate, $C_{12}$- bis $C_{16}$-Alkylsulfate, $C_{12}$- bis $C_{16}$-Alkylsulfosuccinate und sulfatierte ethoxylierte $C_{12}$- bis $C_{16}$-Alkanole. Pulverförmige Waschmittel enthal-

ten überlicherweise 5 bis 20 Gew.% eines Tensids oder einer Mischung von Tensiden.

Die pulverförmige Waschmittel können außerdem gegebenenfalls Polycarbonsäuren bzw. deren Salze enthalten, beispeilsweise Weinsäure und Zitronensäure.

Ein weiterer wichtiger Bestandteil in Waschmittelformulierungen sind Inkrustierungsinhibitoren. Bei diesen Stoffen handelt es sich beispielsweise um Homopolymerisate der Acrylsäure, Methacrylsäure und Maleinsäure bzw. um Copolymerisate, z.B. Copolymerisate aus Maleinsäure und Acrylsäure, Copolymerisate aus Maleinsäure und Methacrylsäure bzw. aus Copolymerisaten von a) Acrylsäure und/oder Methacrylsäure mit b) Acrylsäureestern, Meth acrylsäureestern, Vinylester, Allylestern, Itaconsäureestern, Itaconsäure, Methylenmalonsäure, Methylenmalonsäureester, Crotonsäure und Crotonsäureester. Außerdem kommen Copolymere aus Olefinen und $C_1$- bis $C_4$-Alkylvinylethern in Betracht. Das Molekulargewicht der Homo- und Copolymerisate beträgt 1.000 bis 100.000. Die Inkrustationsinhibitoren werden in einer Menge von 0,5 bis 10 Gew.% in Waschmitteln verwendet, wobei sie in nicht neutralisierter Form, als Alkali- oder Ammoniumsalz sowie in partiell neutralisierter Form, z.B. Neutralisation von 40 bis 60% der Carboxylgruppen, eingesetzt werden.

Weitere Mischungsbestandteile von Waschmitteln können, falls gewünscht, auch Korrosionsinhibitoren, monomere, oligomere und polymere Phosphonate, Ethersulfonate auf der Basis von ungesättigten Fettalkoholen, z.B. Oleylalkoholethoxylatbutylether und deren Alkalisalze sein. Pulverförmige Waschmittel können gegebenenfalls auch Zeolithe enthalten, z.B. in einer Menge von 5 bis 30 Gew.%. Die Waschmittelformulierungen können gegebenenfalls auch Bleichmittel enthalten. Sofern Bleichmittel eingesetzt werden, betragen die üblicherweise angewendeten Mengen 3 bis 25 Gew.%. Als Bleichmittel kommt beispielsweise Natriumperborat in Betracht. Außerdem können die Waschmittelformulierungen gegebenenfalls noch Bleichaktivatoren, Weichmacher, Entschäumer, Parfum, optische Aufheller und Enzyme enthalten. Stellmittel, wie z.B. Natriumsulfat, können in einer Menge von bis zu 40 Gew.% im Waschmittel enthalten sein.

Die oben beschriebenen Pfropfpolymerisate können auch als Zusatz zu Flüssigwaschmitteln verwendet werden. Die Flüssigwaschmittel enthalten als Abmischkomponente flüssige oder auch feste Tenside, die in der Waschmittelformulierung löslich oder zumindest dispergierbar sind. Der Tensidgehalt von Flüssigwaschmitteln liegt üblicherweise in dem Bereich von 15 bis 50 Gew.%. Als Tenside kommen hierfür die Produkte in Betracht, die auch in pulverförmigen Waschmitteln eingesetzt werden sowie flüssige Polyalkylenoxide bzw. polyalkoxylierte Verbindungen. Falls die Pfropfpolymerisate mit den übrigen Bestandteilen des Flüssigwaschmittels nicht direkt mischbar sind, kann man mit Hilfe geringer Menge an Lösungsvermittlern, z.B. Wasser oder eines mit Wasser mischbaren organischen Lösemittels, z.B. Isopropanol, Methanol, Ethanol, Glykol, Diethylenglykol oder Triethylenglykol, eine homogene Mischung herstellen.

Die in den Beispielen angegebenen Teile sind Gew.-Teile, die Angaben in Prozent beziehen sich auf das Gewicht der Stoffe. Die K-Werte der Pfropfpolymerisate wurden nach H. Fikentscher, Cellulosechemie, Band 13, 58-64 und 71-74 (1932) in Dimethylformamid bei einer Temperatur von 25°C und einer Polymerkonzentration von 2 Gew.% bestimmt. Die Molekulargewichtsangaben beziehen sich auf das Zahlenmittel bzw. Gewichtsmittel des Molekulargewichts.

Herstellung der Polykondensate

Polykondensat 1:

In einem 2 l fassenden Kolben werden 1200 g Polyethylenglykol des Molekulargewichts 300 (4 Mol), 528 g (4 Mol) Malonsäuredimethylester, 1,2 g Kalziumacetat und 0,32 g Antimonoxid geschmolzen und 30 Minuten mit Stickstoff begast. Das Reaktionsgemisch wird dann unter Rühren auf eine Temperatur von 150°C erwärmt. Das bei der Reaktion entstehende Methanol wird über eine Füllkörperkolonne, auf die ein Destillationsaufsatz montiert ist, abdestilliert. Die Temperatur der Reaktionsmischung wird langsam bis auf 275°C erhöht. Man entfernt soviel Methanol, bis der Polyesters ein Molekulargewicht (Zahlenmittel) von 1680 hat. Die OH-Zahl des Polyesters beträgt 45.

Polykondensate 2 bis 7:

Man verfährt wie bei der Herstellung des Polykondensats 1 beschrieben, verwendet jedoch die in Tabelle 1 angegebenen Einsatzstoffe. Die dabei erhaltenen Polyester sind ebenfalls in Tabelle 1 harakterisiert.

Polykondensat 8:

In einem 2 l fassenden Kolben werden 166 g Terephthalsäure, 600 g Polyethylenglykol des Molekulargewichts (Zahlenmittel) von 1500, 120 g Ethylenglykol, 0,98 g p-Toluolsulfonsäure und 1,77 g phosphorige Säure unter einem Stickstoffstrom geschmolzen. Die Temperatur des Reaktionsgemisches wird langsam auf 230°C erhöht. Innerhalb von 7 Stunden gibt man 140 g Glykol kontinuierlich zu. Mit Hilfe eines schwachen Stickstoffstromes wird das bei der Kondensation entstehende Glykol/Wasser-Gemisch solange abdestilliert, bis ein Polyester des Molekulargewichts (Zahlenmittel) bis 2500 bis 3000 erhalten wird. Der Polyester hat eine OH-Zahl von 45 und eine Säurezahl von 1,0.

Polykondensat 9:

In einem 2 l fassenden Kolben werden 1650 g Polyethylenglykol vom Molekulargewicht (Zahlenmittel) 1500, 214 g Phthalsäuredimethylester, 0,51 g Kalziumacetat und 0,13 g Antimontrioxid unter einem schwachen Stickstoffstrom geschmolzen und auf eine Temperatur von 250°C erhitzt. Innerhalb von 4 Stunden wird die Temperatur des Reaktionsgemisches auf 275°C erhöht. Um das bei der Umesterung entstehende Methanol aus dem Reaktionsgemisch zu entfernen, wird der Druck auf 4 mbar erniedrigt. Man erhält auf diese Weise einen Polyester mit einem Molekulargewicht (Zahlenmittel) von 5100. Die OH-Zahl des Polyesters beträgt 14.

Polykondensat 10:

Man verfährt wie bei der Herstellung des Polykondensats 9, setzt jedoch anstelle von Phthalsäuredimethylester Dimethylterephthalat ein. Der so erhaltene Polyester hat eine OH-Zahl von 20.

Polykondensat 11:

Gemäß den Angaben im Beispiel 11 der US-PS 3 557 039 wird aus einem Polyalkylenglykol des Molekulargewichts (Zahlenmittel) von 6000, Glykol und Dimethylterephthalat ein Polyester hergestellt, der lt. Angabe in der Patentschrift ein Molekulargewicht (nach dem Gewichtsmittel) von 25 000 hat.

Polykondensat 12:

In einem 2 l fassenden Kolben werden 0,168 Mol Bis($\beta$-hydroxyethyl)-terephthalat, 0,0627 Mol Glykol und 151,2 g Polyethylenoxid vom Molekulargewicht (Zahlenmittel) 1500 in 301,5 g Tetrahydrofuran gelöst und in einem schwachen Stickstoffstrom auf eine Temperatur von 66°C erwärmt. Innerhalb von 1 Stunde tropft man zu dieser Mischung 0,336 Mol Hexamethylendiisocyanat, das in 85 g Tetrahydrofuran gelöst ist. Die Reaktion wird durch Zugabe von 2 Tropfen Dibutylzinndilaurat datalysiert. Da die Viskosität des Reaktionsgemisches im Verlauf der Kondensation ansteigt, gibt man während der Kondensation 200 g Tetrahydrofuran zu. Man wartet dann so lange, bis die Viskosität das Reaktionsgemisches wieder stark angestiegen ist und stoppt die Reaktion dann durch Zugabe von 0,13 g Di-(n-butyl)amin in 5 g Tetrahydrofuran. Danach wird das Tetrahydrofuran im Vakuum abdestilliert und durch Zugabe von Glykol ersetzt, wobei die Innentemperatur bis auf 90°C erhöht wird. Die Molmasse (Gewichtsmittel) beträgt 15 300.

Polykondensat 13:

Man verfährt wie bei der Herstellung des Polykondensats 12, setzt jedoch als Dicarbonsäureester Oxalsäuredimethylester ein. Man erhält ein Polyesterurethan vom Molekulargewicht (nach dem Gewichtsmittel) 10 800.

Polykondensat 14:

0,5 Mol eines mit Ammoniak aminierten Polyethylenglykols des Molekulargewichts 1500, 0,5 Mol Dimethylterephthalat und 5 % Ammoniumchlorid, bezogen auf das aminierte Polyethylenoxid, werden unter einer Stickstoffatmosphäre geschmolzen und anschließend, ebenfalls unter Stickstoff, auf eine Temperatur von 265°C erhitzt. Innerhalb von 45 bis 60 Minuten wird Methanol aus dem Reaktionsgemisch abdestilliert. Man erhält ein Polyesteramid eines Molekulargewichts (nach dem Gewichtsmittel) von 12 500.

Tabelle 1

| Polykon-densat Nr. | Molekularge-wicht des Poly-ethylenglykols | Molverhältnis PEG:EG | Dicarbonsäurekompo-nente und andere Komponenten | Molekulargewicht des Polykonden-sats |
|---|---|---|---|---|
| 1 | 300 | 1:0 | Malonsäuredimethyl-ester | 1700 |
| 2 | 600 | 1:0 | Malonsäuredimethyl-ester | 1840 |
| 3 | 1500 | 1:0 | Malonsäuredimethyl-ester | 2300 |
| 4 | 600 | 1:0 | Oxalsäuredimethyl-ester | 3000 |
| 5 | 1500 | 1:0 | Oxalsäuredimethyl-ester | 2800 |
| 6 | 600 | 1:0 | Oxalsäuredimethyl-ester | 2200 |
| 7 | 600 | 1:0 | Oxalsäuredimethyl-ester | 2500 |
| 8 | 1500 | 1:2 | Terephthalsäure | 2800 |
| 9 | 1500 | 1:0 | Phthalsäuredimethyl-ester | 5100 |
| 10 | 1500 | 1:0 | DMT[1] | 2700 |
| 11 | 1500 | 0,8:0,2 | DMT[1] | 25000 |
| 12 | 1500 | 1:0,6 | Bis($\beta$-hydroxyethyl)-terephthalat, HMDI[2] | 15300 |
| 13 | 1500 | 1:0 | Oxalsäuredimethyl-ester und HMDI | 10800 |
| 14 | 1500 | 1:0 | DMT | 12500 |

1) DMT = Dimethylterephthalat

2) HMDI = Hexamethylendiisocyanat

Herstellung der Pfropfpolymerisate

Die Herstellung der Pfropfpolymerisate erfolgt beispielsweise nach dem aus der DE-PS 1 077 430 bekannten Verfahren, indem man jeweils die Polykondensate 1 bis 11 und 14 auf eine Temperatur von 90 bis 95°C unter Stickstoff erwärmt und 20 Minuten mit Stickstoff spült, und dann die Monomeren und den Initiator gemeinsam oder getrennt zutropft. Als Polymerisationsinitiator verwendet man 1,5 % Dibenzoylperoxid, bezogen auf die eingesetzten Polykondensate. Die Monomeren werden innerhalb von 180 bis 240 Minuten zudosiert. Der Initiatorzulauf beginnt vorzugsweise zusammen mit dem Monomerenzulauf und wird vorzugsweise so eingestellt, daß der gesamte Initiator erst 1 Stunde nach Beendigung der Monomerenzugabe dem Reaktionsgemisch zugeführt wird. Der Initiator wird in Essigester gelöst und in dieser Form in das Reaktionsgemisch gebracht. Nach Abschluß der Initiatorzugabe wird das Reaktionsgemisch noch 2 bis 4 Stunden bei 95°C gerührt. Dann entfernt man die leicht flüchtigen Anteile, wie Essigester und verdünnt das Reaktionsgemisch innerhalb von 2 Stunden durch Zutropfen von Wasser. Je nach Gewichtsanteil der hydrophoben Komponente erhält man eine wäßrige Lösung, eine opake oder milchige Dispersion.

Pfropfen von Polykondensat 12 und 13

Zu 257 g der glykolischen Lösung des Polymeren 12 bzw. 13 läßt man innerhalb von 3 Stunden 129 g Vinylacetat und innerhalb von 4 Stunden 5,4 g Di-tert.-butylperoxid (75 %ig in Wasser) gelöst in 40 g Essigsäureethylester bei einer Reaktionstemperatur von 95°C zutropfen. Während der Reaktion wird ein starker Viskositätsanstieg beobachtet. Man setzt zu diesem Zweck 900 g Glykol zum Reaktionsgemisch und erhitzt es noch 4 Stunden nach Beendigung der Initiatorzugabe auf 95°C. 250 g der so erhaltenen Lösung werden dann bei 100°C mit 250 g Dimethylformamid verdünnt. Zu dieser Mischung gibt man anschließen 333 g Wasser und erhält eine hellbraune, hochviskose Dispersion.

Die hergestellten Pfropfpolymerisate sind in Tabelle 2 angegeben.

Tabelle 2

| Pfropfpo-lymer Nr. | | Gewichtsverhältnis von Polykondensat/ Monomer | K-Wert (2% in DMF[4]) |
|---|---|---|---|
| 1 | Polykondensat 1 / VAc[1] | 1:1,75 | 24,8 |
| 2 | Polykondensat 1 / VAc[1] | 1:2,0 | 27,1 |
| 3 | Polykondensat 2 / VAc[1] | 1:1,75 | 22,1 |
| 4 | Polykondensat 2 / VAc[1] | 1:2,0 | 23,5 |
| 5 | Polykondensat 3 / VAc[1] | 1:1,75 | 21,5 |
| 6 | Polykondensat 3 / VAc[1] | 1:2,0 | 21,9 |
| 7 | Polykondensat 4 / VAc[1] | 1:1,75 | 22,6 |
| 8 | Polykondensat 4 / VAc[1] | 1:2,0 | 23,4 |
| 9 | Polykondensat 5 / VAc[1] | 1:1,75 | 21,2 |
| 10 | Polykondensat 5 / VAc[1] | 1:2,0 | 21,5 |
| 11 | Polykondensat 7 / VAc[1] | 1:1,75 | 20,5 |
| 12 | Polykondensat 7 / VAc[1] | 1:2,0 | 21,7 |
| 13 | Polykondensat 6 / VAc[1] | 1:1,75 | 19,4 |
| 14 | Polykondensat 6 / VAc[1] | 1:2,0 | 19,7 |
| 15 | Polykondensat 7 / VAc[1] | 1:2,25 | 22,3 |
| 16 | Polykondensat 8 / VAc[1] | 1:0,1 | 21,5 |
| 16a | Polykondensat 8 / VAc[1] | 1:0,75 | 21,9 |
| 17 | Polykondensat 8 / VAc[1] | 1:1,0 | 22,6 |
| 18 | Polykondensat 8 / VAc[1] | 1:1,5 | 20,9 |
| 19 | Polykondensat 8 / VAc[1] | 1:2,0 | 22,5 |
| 20 | Polykondensat 8 / VAc[1] | 1:0,25 | 20,3 |
| 21 | Polykondensat 8 / VAc[1] | 1:0,5 | 20,6 |
| 22 | Polykondensat 8 / VPr[2] | 1:0,75 | 18,6 |
| 23 | Polykondensat 8 / VPr[2] | 1:1,0 | 19,9 |
| 24 | Polykondensat 8 / VPr[2] | 1:1,5 | 20,7 |
| 25 | Polykondensat 8 / MA[3] | 1:0,75 | 20,5 |
| 26 | Polykondensat 8 / MA[3] | 1:1,0 | 25,7 |
| 27 | Polykondensat 8 / MA[3] | 1:1,5 | 30,7 |
| 28 | Polykondensat 8 / MA[3] | 1:2,0 | 35,2 |
| 29 | Polykondensat 11 VAc | 1:0,5 | 39,2 |
| 30 | Polykondensat 11 VAc | 1:1,0 | 40,5 |
| 31 | Polykondensat 11 VAc | 1:1,5 | 41,8 |
| 32 | Polykondensat 11 VAc | 1:0,1 | 38,1 |
| 33 | Polykondensat 10 VAc | 1:1,75 | 24,0 |
| 34 | Polykondensat 10 VAc | 1:2,0 | 27,4 |
| 35 | Polykondensat 10 VAc | 1:0,1 | 19,4 |
| 36 | Polykondensat 9 VAc | 1:1,75 | 36,5 |
| 37 | Polykondensat 9 VAc | 1:2,0 | 43,4 |
| 38 | Polykondensat 12 VAc | 1:0,5 | 15,5 |
| 39 | Polykondensat 12 VAc | 1:1,0 | 17,9 |
| 40 | Polykondensat 13 VAc | 1:2,0 | 24,5 |
| 41 | Polykondensat 14 VAc | 1:1,5 | 28,3 |
| 42 | Polykondensat 14 VAc | 1:2,0 | 30,5 |

[1] VAc = Vinylacetat

[2] VPr = Vinylpropionat

[3] MA = Methylacrylat

[4] DMF = Dimethylformamid

Die vergrauungsinhibierende Wirkung der oben beschriebenen Pfropfpolymerisate 1 bis 42 wurde folgendermaßen geprüft:

Polyesterprüfgewebe (PES) und Polyester/Baumwoll-Mischgewebe (PES/BW) wurden zusammen mit einem Standardschmutzgewebe (WFK 10D) einer Reihe von drei Wäschen unterzogen. Das Schmutzgewebe wird nach jeder Wäsche erneuert, wobei das Testgewebe nach jeder Wäsche stärker anschmutzt. Der Weißgrad des Testgewebes nach der 3. Wäsche dient zur Beurteilung des Anschmutzungsgrades. Die Werte werden durch mehrfache Wiederholung und Mittelwertbildung gesichert. Die photometrische Messung des Remission in % wurde im vorliegenden Falle am Elrepho 2000 (Datacolor) bei der Wellenlänge 460 nm gemessen (Barium-Primärweißstandard nach DIN 5033).

Prüfbedingungen: Prüfgerät:Launder-O-meter
Wasserhärte: 3,5 mmol Ca/l, Ca: Mg = 3:2
Flottenmenge: 250 ml
Flottenverhältnis: 1:10
Versuchstemperatur: 35 bis 60°C
Versuchsdauer: 30 Minuten (mit Aufheizzeit)
Waschmittelkonzentration: 8 g/l

In den Beispielen wurde der Vergrauungsinhibitor in einer Menge von 0,3 bzw. von 0,5 %, bezogen auf das Testwaschmittel, zugesetzt. Die Prüfgefäße enthielten jeweils 15 g Testgewebe (5 g Polyester-, 5 g Polyester-Baumwollmisch- und 5 g Baumwollgewebe) und 10 g Schmutzgewebe. Als Schmutzgewebe diente Baumwollschmutzgewebe der Wäschereiforschungsanstalt Krefeld, und zwar WFK 10D.

Das verwendete Testwaschmittel hatte folgende Zusammensetzung:

$C_{12}$-Alkylbenzolsulfonat 6,25 %
Talgfettalkohol umgesetzt mit 11 Ethylenoxid 4,7 %
Seife 2,8 %
Na-triphosphat (90 % Erhaltungsgrad) 20 %
Na-perborat (Tetrahydrat) 20 %
$Na_2SO_4$ 24 %
Natriumdisilikat 6 %
Mg Silikat 25 %
Carboxymethylcellulose (CMC), Na-Salz 0,6 %
Tetranatriumsalz der Ethylendiamintetraessigsäure 0,2 %
Rest Wasser auf 100 %.

Es handelt sich also um ein phosphatreduziertes Waschmittel, wie es nach Inkrafttreten der 2. Stufe der Phosphathöchstmengenverordnung zum deutzchen Waschmittelgesetz seit Januar 1984 im Handel anzutreffen ist.

Tabelle 3 zeigt die Erhöhung der Remission von Polyestergewebe (PES) und Polyester/Baumwollmischgewebe (PES/BW) nach Zusatz der erfindungsgemäß zu verwendenden Pfropfpolymerisate zum eingesetzten Testwaschmittel.

Tabelle 3

| Beispiel | Pfropfpolymer Nr. | % Remission an | |
|---|---|---|---|
| | | PES-Gewebe | PES/BW-Mischgewebe |
| Einsatzkonzentration: 0,3% | | | |
| 1 | 1 | 65,7 | 76,2 |
| 2 | 2 | 68,5 | 76,9 |
| 3 | 3 | 67,4 | 76,9 |
| 4 | 4 | 67,8 | 77,4 |
| 5 | 5 | 70,7 | 77,2 |
| 6 | 6 | 69,2 | 74,2 |
| 7 | 7 | 67,3 | 75,2 |
| 8 | 8 | 68,4 | 76,1 |
| 9 | 9 | 69,5 | 77,3 |
| 10 | 10 | 71,8 | 77,7 |
| 11 | 11 | 68,7 | 76,8 |
| 12 | 12 | 69,3 | 76,1 |
| 13 | 13 | 63,0 | 72,8 |
| 14 | 14 | 59,7 | 73,8 |
| 15 | 15 | 70,6 | 75,6 |
| 16 | 16 | 72,4 | 79,4 |
| 17 | 17 | 74,9 | 77,0 |
| 18 | 18 | 75,0 | 79,0 |
| 19 | 19 | 74,7 | 78,9 |
| Einsatzkonzentration: 0,5% | | | |
| 20 | 22 | 74,5 | 78,4 |
| 21 | 23 | 74,0 | 75,5 |
| 22 | 24 | 72,6 | 76,8 |
| 23 | 25 | 75,9 | 80,2 |
| 24 | 26 | 74,7 | 78,4 |
| 25 | 27 | 72,2 | 76,5 |
| 26 | 28 | 69,5 | 72,4 |
| Einsatzkonzentration: 0,3% | | | |
| 27 | 29 | 67,3 | 75,3 |
| 28 | 30 | 72,9 | 78,5 |
| 29 | 31 | 73,4 | 77,9 |
| 30 | 32 | 74,9 | 78,4 |
| 31 | 33 | 70,1 | 76,0 |
| 32 | 34 | 71,3 | 78,5 |
| 33 | 35 | 73,0 | 78,4 |
| 34 | 36 | 74,3 | 78,1 |
| 35 | 37 | 74,0 | 78,7 |
| 36 | 38 | 61,1 | 75,2 |
| 37 | 39 | 61,2 | 71,2 |
| 38 | 40 | 72,2 | 74,1 |
| 39 | 41 | 67,7 | 71,6 |
| 40 | 42 | 69,4 | 73,1 |

Das oben angegebene Testwaschmittel wurde außerdem mit den in Tabelle 4 angegebenen Mengen an Pfropfpolymerisaten unter Einsatz eines anderen Schmutzgewebes, und zwar EMPA 104-Gewebe (Eidgenössische Material-Prüf-Anstalt, St. Gallen, Schweiz) geprüft. Dabei wurden die in Tabelle 4 angegebenen Werte für die Remission an Polyestergewebe und Mischgewebe aus Polyester und Baumwolle erhalten.

Tabelle 4
Als Schmutzgewebe wurde EMPA 104-Gewebe verwendet.

| Beispiel | Pfropfpolymer Nr. | % Remission an | |
|---|---|---|---|
| | | PES-Gewebe | PES/BW-Mischgewebe |
| Einsatzkonzentration: 0,3% | | | |
| 41 | 7 | 76,3 | 81,2 |
| 42 | 8 | 76,8 | 81,1 |
| 43 | 9 | 76,1 | 80,0 |
| 44 | 10 | 76,0 | 81,3 |
| 45 | 11 | 75,7 | 80,8 |
| 46 | 12 | 75,4 | 80,3 |
| 47 | 13 | 73,7 | 77,0 |
| 48 | 14 | 74,6 | 77,6 |
| 49 | 15 | 76,0 | 80,9 |
| 50 | 16 | 63,4 | 65,2 |
| 51 | 16a | 66,4 | 63,6 |
| 52 | 17 | 69,0 | 66,2 |
| 53 | 18 | 72,2 | 78,9 |
| 54 | 19 | 72,4 | 77,0 |
| 55 | 33 | 73,8 | 74,9 |
| 56 | 34 | 74,4 | 76,9 |
| 57 | 36 | 66,0 | 70,9 |
| 58 | 37 | 60,9 | 64,0 |
| 59 | 32 | 63,5 | 64,2 |
| 60 | 29 | 66,3 | 78,1 |
| 61 | 30 | 63,3 | 76,0 |
| 62 | 31 | 63,3 | 74,4 |

In den Tabellen 5 und 6 sind Ergebnisse von Vergleichsbeispielen angegeben, bei denen das oben beschriebene Testwaschmittel entweder keine Zusätze (Vergleichsbeispiele 1 und 22) bzw. die in den Tabellen 5 und 6 jeweils angegebenen Zusätze in einer Menge von 0,3 Gew.% enthielt). Wie bei einer Gegenüberstellung der Beispiele und der Vergleichsbeispiele hervorgeht, zeigen die Pfropfpolymerisate gegenüber den nicht gepfropften zugrundeliegenden Polykondensaten eine ausgeprägte Wirkung als Vergrauungsinhibitor. Auch die Polyvinylacetat- bzw. Polyvinylpropionatdispersionen zeigen keine vergrauungsinhibierende Wirkung im Testwaschmittel.

Tabelle 5
Als Schmutzgewebe wurde WFK 10D-Gewebe verwendet.

| Vergleichsbeispiel | Polykondensat Nr. | % Remission an | |
|---|---|---|---|
| | | PES-Gewebe | PES/BW-Mischgewebe |
| 1 | ohne Zusatz | 45,3 | 61,2 |
| 2 | PEO[1] (Mn = 1500) | 46,2 | 61,8 |
| 3 | PEO (Mn = 6000) | 45,5 | 62,9 |
| 4 | 1 | 44,1 | 60,3 |
| 5 | 2 | 45,2 | 62,8 |
| 6 | 3 | 42,5 | 62,1 |
| 7 | 4 | 42,8 | 60,2 |
| 8 | 5 | 43,4 | 61,0 |
| 9 | 6 | 44,1 | 60,9 |
| 10 | 7 | 42,2 | 60,5 |
| 11 | 8 | 64,3 | 72,0 |
| 12 | 9 | 62,5 | 68,1 |
| 13 | 10 | 63,9 | 70,6 |
| 14 | 11 | 64,1 | 71,8 |
| 15 | 12 | 58,2 | 66,5 |
| 16 | 13 | 63,6 | 68,9 |
| 17 | 14 | 59,9 | 70,1 |
| 18 | PVAc[2]-Dispersion (K-Wert des Polymeren 42,0) | 44,8 | 58,9 |
| 19 | PVPr[3]-Dispersion (K-Wert des Polymeren 51,7) | 43,9 | 57,1 |
| 20 | PMA[4]-Dispersion (K-Wert des Polymeren 63,2) | 43,1 | 59,5 |
| 21 | Mischung aus Polykondensat 1 und PVAc-Dispersion im Gewichtsverhältnis 1:2 | 45,4 | 57,2 |

[1] PEO = Polyethylenoxid

[2] PVAc = Polyvinylacetat

[3] PVPr = Polyvinylpropionat

[4] PMA = Polymethylacrylat

Tabelle 6
Als Schmutzgewebe wurde EMPA 104-Gewebe verwendet.

| Vergleichsbeispiel | Polykondensat Nr. | % Remission an | |
|---|---|---|---|
| | | PES-Gewebe | PES/BW-Mischgewebe |
| 22 | ohne Zusatz | 54,0 | 64,1 |
| 23 | PEO (Mn = 1500) | 54,2 | 63,7 |
| 24 | PEO (Mn = 6000) | 54,8 | 64,2 |
| 25 | 1 | 54,9 | 64,3 |
| 26 | 2 | 54,7 | 65,2 |
| 27 | 3 | 53,4 | 64,8 |
| 28 | 4 | 55,1 | 64,7 |
| 29 | 5 | 54,2 | 63,9 |
| 30 | 6 | 53,9 | 64,8 |
| 31 | 7 | 54,9 | 65,4 |
| 32 | 8 | 56,9 | 52,8 |
| 33 | 11 | 62,7 | 61,5 |
| 34 | 10 | 61,8 | 62,3 |
| 35 | 9 | 63,2 | 63,4 |
| 36 | PVAc-Dispersion (K-Wert 42) | 52,5 | 56,2 |
| 37 | PVPr-Dispersion (K-Wert 51,7) | 53,1 | 56,8 |
| 38 | PMA-Dispersion | 51,9 | 54,7 |
| 39 | Mischung aus Polymer 1 und PVAc-Dispersion (K-Wert 42) im Gewichts-verhältnis 1:2 | 53,2 | 55,9 |

**Patentansprüche**

1. Verwendung von Polymerisaten in Waschmitteln, dadurch gekennzeichnet, daß man als Vergrauungsinhibitor in Waschmitteln Pfropfpolymerisate einsetzt, die erhältlich sind durch Pfropfen von
a) Polykondensaten auf Basis von Polyestern, Polyesterurethanen oder Polyesteramiden eines Molekulargewichts (Zahlenmittel) von jeweils 500 bis 100 000 mit
b) 0,2 bis 10 Gewichtsteilen, bezogen auf 1 Gewichtsteil der Polykondensate, an Vinylestern gesättig-ter $C_1$- bis $C_6$-Carbonsäuren und/oder Acrylsäure- und/oder Methacrylsäureestern von gesättigten, einwertigen 1 bis 4 C-Atome enthaltenden Alkoholen.

2. Verwendung von Pfropfpolymerisaten nach Anspruch 1, dadurch gekennzeichnet, daß als Komponente a) Polyester eingesetzt werden, die durch Kondensation von Dicarbonsäuren oder deren Estern mit Glykolen und/oder Polyalkylenglykolen eines Molekulargewichts (Zahlenmittel) von 300 bis 50 000 erhältlich sind.

3. Verwendung von Pfropfpolymerisaten nach Anspruch 1, dadurch gekennzeichnet, daß als Komponente a) Polyesterurethane eingesetzt werden, die durch Kondensation von Dicarbonsäuren und/oder deren Estern mit Glykolen und/oder Polyalkylenglykolen eines Molekulargewichts (Zahlenmittel) von 300 bis 50 000 in Gegenwart von Diisocyanaten oder Polyisocyanaten erhältlich sind.

4. Verwendung von Pfropfpolymerisaten nach Anspruch 1, dadurch gekennzeichnet, daß als Komponente a) Polyesteramide eingesetzt werden, die durch Kondensation von Dicarbonsäuren und/oder deren Estern mit aminierten Polyalkylenoxiden eines Molekulargewichts (Zahlenmittel) von 300 bis 50 000 erhältlich sind.

5. Verwendung nach den Ansprüchen 1 bis 4, dadurch gekennzeichnet, daß als Komponente b) Vinylacetat, Vinylpropionat, Acrylsäuremethylester, Acrylsäureethylester, Methacrylsäuremethylester, Methacrylsäureethylester oder deren Mischungen eingesetzt werden.

6. Verwendung von Pfropfpolymerisaten nach Anspruch 1, dadurch gekennzeichnet, daß sie erhält-lich sind durch Pfropfen von
a) Polyestern aus Dicarbonsäuren oder deren Estern mit Ethylenglykol und Polyethylenglykol eines

13

Molekulargewichts (Zahlenmittel von 300 bis 10 000, wobei bis zu 80 mol.% der Diolkomponenten Ethylenglykol sein kann,
b) Vinylacetat oder Acrylsäuremethylester oder deren Mischungen.
7. Waschmittel auf der Basis von Tensiden, Gerüststoffen und gegebenenfalls anderen üblichen Zusätzen, dadurch gekennzeichnet, daß sie als Vergrauungsinhibitor 0,1 bis 5 Gew.% an Pfropfpolymerisaten aufweisen, die erhältlich sind durch Pfropfen von
a) Polykondensaten auf Basis von Polyestern, Polyesterurethanen und Polyesteramiden eines Molekulargewichts (Zahlenmittel) von 500 bis 100,000 mit
b) 0,2 bis 10 Gewichtsteilen, bezogen auf 1 Gewichtsteile der Polykondensate an Vinylestern gesättigter $C_1$- bis $C_6$-Carbonsäuren, Acrylsäure- und/oder Methacrylsäureestern von gesättigten, einwertigen 1 bis 4 C-Atome enthaltenden Alkoholen.

## Claims

1. Use of polymers in detergents, which comprises using as grayness inhibitors in detergents graft polymers obtainable by grafting
a) polycondensates based on polyesters, polyester urethanes or polyester amides of a number average molecular weight from in each case 500 to 100,000 with
b) from 0.2 to 10 parts by weight, based on 1 part by weight of the polycondensates, of vinyl esters of saturated $C_1$- to $C_6$-carboxylic acids, and/or acrylic and/or methacrylic esters of saturated monohydric alcohols containing 1 to 4 carbon atomes.
2. Use of graft polymers as claimed in claim 1, wherein component a) comprises polyesters obtainable by condensation of dicarboxylic acids or esters thereof with glycols and/or polyalkylene glycols of number average molecular weight from 3000 to 50,000.
3. Use of graft polymers as claimed in claim 1, wherein component a) comprises polyester urethanes obtainable by condensation of dicarboxylic acids and/or esters thereof with glycols and/or polyalkylene glycols of number average molecular weight from 300 to 50,000 in the presence of diisocyanates or polyisocyanates.
4. Use of graft polymers as claimed in claim 1, wherein component a) comprises polyester amides obtainable by condensation of dicarboxylic acids and/or esters thereof with aminated polyalkylene of number average molucular weight from 300 to 50,000.
5. Use as claimed in any of claims 1 to 4, wherein component b) comprises vinyl acetate, vinyl propinate, methyl acrylate, ethyl acrylate, methyl methacrylate, ethyl methacrylate or mixtures thereof.
6. Use of graft polymers as claimed in claim 1, which are obtainable by grafting
a) polyesters of dicarboxylic acids or esters thereof with ethylene glycol and polyethylene glycol of number average molecular weight from 300 to 10,000, where up to 80 mole% of the diol components can be ethylene glycol,
b) vinyl acetate or methyl acrylate or mixtures thereof.
7. A detergent based on surfactants and builders with or without other customary additives, which contains as grayness inhibitor from 0.1 to 5% by weight of graft polymers obtainable by grafting
a) polycondensates based on polyesters, polyester urethanes and polyester amides and having a number average molecular weight from 500 to 100,000 with
b) from 0.2 to 10 parts by weight, based on 1 part by weight of the polycondensates, of vinyl esters of saturated $C_1$- to $C_6$-carboxylic acids, acrylic and/or methacrylic esters of saturated monohydric alcohols containing 1 to 4 carbon atoms.

## Revendications

1. Utilisation de polymères dans des produits de lavage, caractérisée en ce qu'on utilise, comme inhibiteur de grisaille par redéposition dans des produits de lavage, des polymères greffés qui peuvent être obtenus par greffage de
a) polycondensats à base de polyesters, de polyesteruréthanes ou de polyesteramides ayant un poids moléculaire (moyenne en nombre) de 500 à 100 000 avec
b) 0,2 à 10 parties en poids, par rapport à 1 partie en poids des polycondensats, d'esters vinyliques d'acides carboxyliques en $C_1$ à $C_6$ saturés et/ou d'acrylates et/ou de méthacrylates de mono-alcools saturés contenant 1 à 4 atomes de carbone.
2. Utilisation de polymères greffés selon la revendication 1, caractérisée en ce qu'on utilise, comme composants a), des polyesters qui peuvent être obtenus par condensation d'acides dicarboxyliques ou de leurs esters avec des glycols et/ou des polyalkylèneglycols ayant un poids moléculaire (moyenne en nombre ) de 300 à 50 000.
3. Utilisation de polymères greffés selon la revendication 1, caractérisée en ce qu'on utilise, comme composants a), des polyesteruréthane qui peuvent être obtenus par condensation d'acides dicarboxyliques et/ou de leurs esters avec des glycols et/ou des polyalkylèneglycols ayant un poids moléculaire (moyenne en nombre ) de 300 à 50 000, en présence de diisocyanates ou de polyisocyanates.
4. Utilisation de polymères greffés selon la revendication 1, caractérisée en ce qu'on utilise, comme composants a), des polyesteramides qui peuvent être obtenus par condensation d'acides dicarboxyliques et/ou de leurs esters avec des oxydes de polyalkylène aminés ayant un poids moléculaire (moyenne en nombre) de 300 à 50 000.

5. Utilisation selon l'une quelconque des revendications 1 à 4, caractérisé en ce qu'on utilise, comme composant b), de l'acétate de vinyle, du propinate de vinyle, de l'acrylate de méthyle, de l'acrylate d'éthyle, du méthacrylate de méthyle, du méthacrylate d'éthyle ou des mélanges de ceux-ci.

6. Utilisation de polymères greffés selon la revendication 1, caractérisée en ce que ceux-ci peuvent être obtenus par greffage de

a) polyesters d'acides dicarboxyliques ou de leurs esters avec de l'éthylèneglycol ou un polyéthylèneglycol ayant un poids moléculaire (moyenne en nombre) de 300 à 10 000, jusqu'à 80% en moles des composants diols pouvant être de l'éthylèneglycol, avec

b) de l'acétate de vinyle, de l'acrylate de méthyle ou des mélanges de ceux-ci.

7. Produits de lavage à base de tensides, de matières de soutien et éventuellement d'autres additifs usuels, caractérisés en ce qu'ils contiennent, en tant qu'inhibiteur de grisaille par redéposition, de 0,1 à 5% en poids de polymères greffés qui peuvent être obtenus par greffage de

a) polycondensats à base de polyesters, de polyesteruréthanes ou de polyesteramides ayant un poids moléculaire (moyenne en nombre) de 500 à 100 000 avec

b) 0,2 à 10 parties en poids, par rapport à 1 partie en poids des polycondensats, d'esters vinyliques d'acides carboxyliques en $C_1$ à $C_6$ saturés et/ou d'acryltes et/ou de méthacrylates de mono-alcools saturés contenant 1 à 4 atomes de carbone.